# EUROPÄISCHE PATENTSCHRIFT

(11) **EP 3 112 124 B1**
(45) Veröffentlichungstag und Bekanntmachung des Hinweises auf die Patenterteilung: **29.08.2018**
(21) Anmeldenummer: 16176475.8
(22) Anmeldetag: 27.06.2016
(51) Int. Cl.: B29C 47/00, B32B 15/04, B29C 47/02, B29C 47/06, B29C 47/28, B29C 47/86, B29C 47/92, B29C 44/32, B32B 1/08, B29L 9/00, B29L 23/00, B29K 105/04, F16L 59/14, F16L 9/147, B29K 101/12, B32B 15/08

(54) **VERFAHREN ZUR BESCHICHTUNG EINER ROHRLEITUNG**
METHOD FOR COATING A PIPE
PROCEDE DESTINÉ A REVÊTIR UNE CONDUITE

(30) Priorität: 29.06.2015 DE 102015110401
(43) Veröffentlichungstag der Anmeldung: 04.01.2017
(73) Patentinhaber: Brugg Rohrsysteme GmbH, 31515 Wunstorf (DE)
(72) Erfinder: Homann, Jörn, 30655 Hannover (DE); Dudat, Christian, 30827 Garbsen (DE)
(74) Vertreter: Scheffler, Jörg

(56) Entgegenhaltungen:
- EP-A1- 1 840 444
- EP-A1- 2 620 268
- EP-A2- 2 053 299
- DE-A1- 3 121 773
- DE-A1- 19 507 110
- FR-A1- 2 625 941
- JP-A- H0 281 618
- JP-A- H06 182 846

## Beschreibung

Die Erfindung betrifft ein Verfahren zur Beschichtung einer Rohrleitung, bei dem ein Beschichtungsmaterial aus einem extrudierten thermoplastischen Kunststoff mit einem zellularen Aufbau auf die Rohrleitung aufgebracht und außenseitig von einer äußeren Deckschicht aus einem kompakten Kunststoff, beispielsweise Polyethylen, eingeschlossen wird, wobei das fließfähige Beschichtungsmaterial vor dem Aufbringen auf die Rohrleitung über eine Wärmeaustauscherfläche eines Spritzkopfs geführt und auf eine Temperatur abgekühlt wird, die nicht mehr als 30 K oberhalb seiner Erstarrungstemperatur liegt, dadurch gekennzeichnet, dass die äußere Deckschicht mit einer ringförmig gewellten Struktur hergestellt wird, indem die Abzugsgeschwindigkeit der Rohrleitung schwellend zwischen einer maximalen Geschwindigkeit und einer minimalen Geschwindigkeit gesteuert wird. Beschichtete Rohrleitungen finden beispielsweise im erdverlegten Rohrleitungsbau Verwendung. Die Durchmesser der Rohrleitungen liegen in der Regel zwischen 90 und 1.200 mm, wobei auch größere Durchmesser möglich sind. Die Rohre bestehen aus einer Rohrleitung als Mediumrohr, vorzugsweise aus Stahl, wobei jedoch auch andere Werkstoffe möglich sind.

Das Rohr wird vorzugsweise von einer zum mechanischen und Korrosionsschutz dienenden Isolierung umgeben, bei der es sich in der Regel um Polyäthylen als Beschichtungsmaterial handelt. Zum Schutz vor thermischen Einwirkungen werden auch aus Hartschaum hergestellte Zwischenschichten eingebracht.

Als mechanischer oder Korrosionsschutz sind überwiegend Mantelsysteme aus kompakt extrudierten thermoplastischen Kunststoffen auf metallischen Grundrohren im Einsatz, auch in Verbindung mit Hilfsschichten, z.B. zur Haftungsverbesserung. Diese kompakten Mantelsysteme erweisen sich jedoch als recht biegesteif. Insbesondere bei flexiblen Rohrsystemen, welche bestimmungsgemäß für eine dynamische Anwendung vorgesehen sind, erweist sich ein biegeweicher Mantelaufbau als besonders vorteilhaft. Gegenstand dieser Erfindung ist es auch, anstatt des bisher ausgeführten kompakten Mantelsystems ein Mantelsystem mit einer zellularen Lage auszuführen, um so eine deutlich erhöhte Flexibilität zu erzielen.

Ebenso sind Mantelsysteme im Sandwichaufbau für thermische Isolierungen im Einsatz. Der Haftverbund eines derartigen Sandwichsystems ist für die Rohrstatik bei erdverlegten, warmgehenden Leitungen von großer Bedeutung, um sicherzustellen, dass die zur Wärmedämmung vorgesehene Isolierung über einen langen Zeitraum vollständig ihre Funktion erfüllt. Aufgrund von umfangreichen Untersuchungen wurde jedoch festgestellt, dass solche Isolierungen, insbesondere Hartschaumisolierungen, speziell aus Polyurethanschaum, altern, und zwar insbesondere bei hohen Temperaturen oberhalb von ca. 120 °C.

Aus der WO 2004/003423 A1 ist ein isoliertes Rohr mit einem oder mehreren Innenrohren und einem Isolationsschaum, der das Innenrohr umgibt, bekannt. Das Rohr weist eine diffusionsregulierende Schicht auf, die auf der Außenseite des Schaums aufgebracht ist.

In der DE 10 2007 015 660 A1 wird ein flexibles wärmeisoliertes Leitungsrohr beschrieben, bestehend aus zumindest einem Medium führenden Innenrohr, einem das zumindest eine Innenrohr umgebenden Außenrohr sowie einer zwischen dem zumindest einen Innenrohr und dem Außenrohr befindlichen Wärmedämmschicht auf der Basis von Polyurethanschaum, bei welchem dem Schaum Hohlkugeln beigegeben sind. Der flexible Polyurethanschaum lässt bei einer Krafteinwirkung eine gewisse Kompression zu. Dadurch wird die Biegesteifigkeit des Leitungsrohres, bei welchem das Kunststoff-Innenrohr, der Polyurethanschaum und das Kunststoff-Außenrohr einen Verbund bilden, verringert. Das führt dazu, dass beim Biegen des Leitungsrohres um enge Radien Brüche im Schaum nicht bzw. minimiert zu erwarten sind.

Weiterhin ist ein flexibles wärmeisoliertes Leitungsrohr beispielsweise auch aus der EP 2 620 268 A1 bekannt. Die Deckschicht wird dabei zur beschleunigten Aushärtung durch ein flüssiges Kühlmittel, insbesondere Wasser, abgekühlt.

Die DE 32 16 463 A1 betrifft ein Verfahren zum Herstellen eines flexiblen Fernwärmeleitungsrohres mit einem zentralen Medienrohr aus Metall und einer Schaumstoffisolierung in einem Kunststoffmantel, der kontinuierlich als Schlauch aus einem thermoplastischen Kunststoff extrudiert und unmittelbar danach gekühlt wird.

Die DE 93 10 530 U1 beschreibt das Umschäumen eines Rohres mit PUR-Schaum und die JP H02-81 618 A das Umschäumen eines Rohres in Koextrusion mit Haftvermittler mit glatter Oberfläche ohne äußere Deckschicht.

Die gattungsgemäße DE 195 07 110 A1 offenbart ein Verfahren zur Beschichtung einer Rohrleitung durch das Umschäumen eines Rohres mit PE-Schaum. Der expandierende Schaum ist von einem gewellten Schutzmantel eingeschlossen, der durch einen Corrugator geformt wird. Dabei wird ein Beschichtungsmaterial aus einem extrudierten thermoplastischen Kunststoff mit einem zellularen Aufbau auf die Rohrleitung aufgebracht und außenseitig von einer äußeren Deckschicht aus einem kompakten Kunststoff eingeschlossen. Vor dem Aufbringen auf die Rohrleitung wird das fließfähige Beschichtungsmaterial über eine Wärmeaustauscherfläche geführt und abgeküht.

Gemäß der DE 31 21 773 A1 wird zum Konstanthalten der Betriebstemperatur und zur Vermeidung der zusätzlichen Aufheizung des Extruderkopfes durch das auf 300 °C vorgewärmte Stahlrohr ein gasförmiges oder flüssiges Kühlmittel zugeführt.

Die FR 2 625 941 A1 offenbart einen Koextrusionskopf mit einem Ringspalt, der durch mindestens eine Wärmeaustauscherfläche begrenzt ist.

Die WO 00/35 657 A1 bezieht sich auf das Umschäumen eines Rohres mit syntaktischem Schaum und auf einen Extrusionsspritzkopf. Der expandierende Schaum folgt dem glatten Schutzmantel.

Aus der JP S54-123 167 A ist ferner eine Extrusionsvorrichtung mit einer Kühleinrichtung bekannt.

Bei einem bekannten Herstellungsverfahren werden einzelne Medienrohre mit Abstandshaltern versehen und anschließend ein Mantelrohr aus Polyethylen aufgezogen. In den Hohlraum zwischen Medien- und Mantelrohr, die sich in einer leicht geneigten Ebene befinden, wird daraufhin der Polyurethan-Schaum mit hoher Geschwindigkeit eingetragen, der sich nachfolgend von oben nach unten ausbreitet. Nachteilig an diesem Verfahren ist, dass sich der Polyurethan-Schaum durch die hohe Einspritzgeschwindigkeit und den langen Fließweg nicht laminar ausbreitet. Es entstehen Turbulenzen, die zur Lunkerbildung sowie zu Dichteschwankungen im Rohr führen. Auch weichen die Wärmeleitfähigkeiten und die mechanischen Eigenschaften lokal stark voneinander ab.

Bei einem Axial-Kontiverfahren wird das Medienrohr in einer U-förmigen Aluminiumfolie geführt und die Aluminiumfolie mit Polyurethan-Schaum ausgespritzt. Anschließend wird die gefüllte Folie um das Medienrohr gelegt und geschlossen, sodass das Medienrohr mit dem Polyurethan-Schaum ummantelt ist. In einer Kalibriereinrichtung erfolgt die Aushärtung des Polyurethan-Schaums. Abschließend wird das Rohr mit Polyethylen ummantelt.

Beim Spiral-Kontiverfahren wird der Polyurethan-Schaum gleichmäßig auf aneinander gereihte Medienrohre aufgespritzt, während diese um die eigene Achse rotieren. In einem zweiten Schritt wird ein Polyethylen-Mantel wendelförmig auf das weiterhin rotierende Rohr aufgebracht.

Bei der Mischkopfziehtechnik wird der Polyurethan-Schaum mit einem Mischkopf in den Hohlraum zwischen einem Medienrohr und einem Mantelrohr eingetragen, wobei der Mischkopf in den Hohlraum eingeführt ist. Der Mischkopf wird durch den Hohlraum gezogen, wobei er den Hohlraum mit Polyurethan-Schaum ausspritzt.

Als nachteilig erweist sich der hohe Aufwand, der mit der Herstellung von Isolierung verbunden ist, wenn hierzu zusätzlich zu dem Medienrohr ein Mantelrohr eingesetzt und in einem weiteren Schritt der Isolierschaum zwischen den beiden Rohren eingebracht werden muss.

Der Erfindung liegt die Aufgabe zugrunde, ein wesentlich vereinfachtes Herstellungsverfahren zu realisieren.

Diese Aufgabe wird erfindungsgemäß mit einem Verfahren gemäß den Merkmalen des Anspruchs 1 gelöst. Die weitere Ausgestaltung der Erfindung ist den Unteransprüchen zu entnehmen.

Erfindungsgemäß ist also ein Verfahren zur Beschichtung von Rohrleitungen vorgesehen, bei dem zum Erzielen der gewellten Struktur der äußeren Deckschicht die Abzugsgeschwindigkeit der Rohrleitung schwellend zwischen einer maximalen Geschwindigkeit und einer minimalen Geschwindigkeit gesteuert wird. Indem also die Vorschubbewegung der Rohrleitung nicht etwa konstant eingestellt wird, sondern einer stetigen Verzögerung sowie Beschleunigung unterliegt, wird dementsprechend eine unterschiedliche Menge des Beschichtungsmaterials bezogen auf eine bestimmte Länge der Rohrleitung auf diese aufgebracht. Infolgedessen kommt es im Bereich einer erhöhten Beschichtungsmaterialzufuhr zu einer radialen Aufweitung, die zu der gewünschten Wellenform führt. Hierzu wird die auch als Liniengeschwindigkeit bezeichnete Vorschubbewegung periodisch zu- und abnehmend derart gesteuert, dass sich ein sinusförmiger Verlauf der Geschwindigkeit ergibt.

Durch die Abkühlung des fließfähigen Beschichtungsmaterials wird dessen Expansionsfähigkeiten bzw. die Fließeigenschaften auf einen vorbestimmten Wert eingestellt, vorzugsweise auf ein Minimum reduziert, mit der Folge, dass die äußere Deckschicht keine formstabilen Eigenschaften aufweisen muss, sondern beispielsweise ebenfalls als ein Extrudat erzeugt und gemeinsam mit dem fließfähigen Beschichtungsmaterial auf die Rohrleitung aufgebracht werden kann. Dabei begrenzt die Deckschicht die radiale Ausdehnung des Beschichtungsmaterials und wirkt dadurch formend, ohne dass zugleich hohe Druckkräfte aufgenommen werden müssen. Auf diese Weise kann die Biegefähigkeit der beschichteten Rohrleitung wesentlich verbessert werden.

Hierbei erweist es sich als besonders vorteilhaft, wenn dem thermoplastischen Kunststoff für die Beschichtung eine der gewünschten Expansion entsprechende Menge eines Treibmittels zugegeben wird, um so in einfacher Weise die Aufweitung der äußeren Deckschicht entsprechend der zulässigen und sinnvollen Belastungsgrenzen der äußeren Deckschicht einstellen zu können.

Weiterhin erweist es sich als besonders Erfolg versprechend, wenn gemäß einer Variante zwischen der Beschichtung und der Rohrleitung eine innere Deckschicht aus einer Folie auf die Rohrleitung aufgebracht wird. Indem zunächst eine innere Deckschicht als Trennschicht auf die Rohrleitung aufgebracht wird, kann zugleich ein Ausgleich von Unebenheiten und eine Dichtungsschicht erreicht werden, um das Eindringen von Leckagesubstanzen der Rohrleitung in die Beschichtung zu vermeiden. Weiterhin kann die innere Deckschicht auch der Überbrückung von Wellentälern eines Wellrohrs dienen, um so das Aufbringen des Beschichtungsmaterials zu vereinfachen. Dadurch bleiben die Wellentäler frei von Beschichtungsmaterial, um so die flexiblen Eigenschaften der Rohrleitung weitgehend unverändert zu erhalten.

Die innere Deckschicht könnte als ein Schlauch auf die Rohrleitung aufgebracht werden. Besonders einfach ist hingegen die Durchführung des Verfahrens, wenn die innere Deckschicht bzw. Trennschicht überlappend auf die Rohrleitung gewickelt wird. Hierdurch kann die Deckschicht mit einem vergleichsweise geringen Aufwand aus einem streifenförmigen Material auf die Rohrleitung aufgebracht werden. Vorzugsweise erfolgt das Aufbringen in einem Verfahrenschritt unmittelbar vor der Zuführung des Beschichtungsmaterials, sodass die gesamte Beschichtung einschließlich der inneren und äußeren Deckschicht in einem einheitlichen Verfahrensschritt erfolgen und die beschichtete Rohrleitung fertiggestellt werden kann.

Eine andere, ebenfalls besonders Erfolg versprechende Abwandlung der Erfindung wird dadurch realisiert, dass zwischen der Beschichtung und der Rohrleitung eine innere Haftvermittlerschicht auf die Rohrleitung aufgebracht wird, um so ein zuverlässiges Anhaften des Beschichtungsmaterials und der Rohrleitung auch bei zyklischer, elastischer Verformung der Rohrleitung sicherzustellen. Weiterhin sind auch Varianten realisierbar, bei denen die Haftvermittlerschicht auf die innere Deckschicht aufgebracht wird.

In ähnlicher Weise wird gemäß einer weiteren Variante zwischen der Beschichtung und einer äußeren Deckschicht eine äußere Haftvermittlerschicht aufgebracht, um so insbesondere eine besonders zuverlässige Verbindung beispielsweise durch Adhäsion zwischen dem Beschichtungsmaterial und der äußeren Decksicht zu erreichen. Die äußere Haftvermittlerschicht kann in demselben Verfahrensschritt wie das Ausbringen des Beschichtungsmaterials erfolgen, indem diese beispielsweise durch Koextrusion erzeugt wird.

Eine weitere, ebenfalls Erfolg versprechende Variante wird dadurch realisiert, dass die innere oder die äußere Haftvermittlerschicht durch Spülauftrag oder Sprühauftrag aufgebracht wird, um so das Aufbringen der Haftvermittlerschicht insbesondere bei einer komplexen Oberflächenbeschaffenheit der Rohrleitung zu vereinfachen.

Besonders bevorzugt ist in der Praxis eine Variante einsetzbar, bei welcher das Beschichtungsmaterial durch einen Extrusionsspalt eines Extruders zugeführt wird und nach dem Austritt aus dem Extrusionsspalt derart expandiert, dass die äußere Haftvermittlerschicht oder die äußere Deckschicht in vorbestimmter Weise geweitet wird. Dabei stellt sich in gewünschter Weise ein Gleichgewicht zwischen den Expansionskräften des Beschichtungsmaterials und dem zunehmenden Widerstand der äußeren Deckschicht entgegen der fortgesetzten Dehnung ein, wodurch sich in überraschend einfacher Weise ein selbstregelndes System ergibt.

Besonders praxisgerecht ist auch eine Ausgestaltung des erfindungsgemäßen Verfahrens, bei dem zugleich das Beschichtungsmaterial, zumindest eine innere Haftvermittlerschicht oder eine äußere Haftvermittlerschicht und die äußere Deckschicht im Koextrusionsverfahren aufgebracht werden, sodass der mehrschichtige Beschichtungsaufbau in einem einzigen Verfahrensschritt erzeugt werden kann. Die Herstellung kann dadurch besonders schnell und wirtschaftlich erfolgen und erfordert zudem lediglich eine einzige Extrusionsvorrichtung.

Weiterhin ist es von besonderes praktischem Vorteil, wenn das Beschichtungsmaterial, zumindest eine innere oder äußere Haftvermittlerschicht und die äußere Deckschicht in einem Querspritzkopf zusammengeführt und ringförmig um die Rohrleitung auf diese aufgebracht werden, sodass die Rohrleitung endlos zugeführt werden kann, ohne dass eine Unterbrechung des Beschichtungsprozesses erforderlich ist. Zudem können Rohrleitungen mit unterschiedlichen Durchmessern problemlos mittels desselben Spritzkopfs mit der gewünschten Beschichtung versehen werden.

Als Beschichtungsmaterial haben sich in der Praxis bereits Polyamid, Polybutylenterephthalat, Polyethylenterephthalat, Polypropylen, Polyketon oder Polyethylen besonders bewährt. Diese können mit geringem Aufwand verarbeitet werden und weisen eine hohe Elastizität auf.

Die äußere Form der Deckschicht könnte koaxial zur Mittelachse der Rohrleitung mit einer glatten Wandfläche verlaufen. Für verschiedene Einsatzzwecke hat es sich bereits als besonders sinnvoll erwiesen, wenn die äußere Deckschicht mit einer ringförmig gewellten Struktur hergestellt wird. Weiterhin ist auch ein schraubenlinienförmiger Verlauf der äußeren Deckschicht realisierbar.

Vorzugsweise wird die Beschichtung auf eine Rohrleitung mit gewellter Struktur und bei einer Stärke der Beschichtung, die geringer ist als die Wellenhöhe der gewellten Struktur der Rohrleitung, parallel zu dem Wellenverlauf der Rohrleitung aufgebracht, wobei die axiale Position ebenso wie die Wellenlänge der Rohrleitung mit der gewellten äußeren Deckschicht nicht übereinstimmen müssen.

Besonders bevorzugt ist auch eine weitere Ausgestaltung des Verfahrens, bei welcher die Rohrleitung oder die innere Deckschicht bzw. Trennschicht gemeinsam mit der äußeren Deckschicht die Beschichtung dimensionsstabil einschließen, sodass die Beschichtungsstärke auch bei äußeren Krafteinwirkungen, beispielsweise aufgrund der Verlegung im Erdreich, zuverlässig erhalten bleibt. Eine unerwünschte Reduzierung der Beschichtung kann daher durch das sogenannte Kammern zuverlässig vermieden werden.

Eine weitere besonders vorteilhafte Ausgestaltung des erfindungsgemäßen Verfahrens wird dadurch erreicht, dass die Rohrleitung oder die innere Deckschicht auf eine Temperatur unterhalb der Erstarrungstemperatur des Beschichtungsmaterials gebracht wird. Indem die Rohrleitung oder die innere Deckschicht eine Temperatur aufweisen, die zumindest 20K unterhalb der Erstarrungstemperatur des Beschichtungsmaterials liegt, wird eine schnelle Erstarrung des Beschichtungsmaterials beim Auftragen auf die Rohrleitung erreicht, sodass ein unerwünschtes, unkontrolliertes Fließen des Beschichtungsmaterials unter dem Einfluss der Schwerkraft weitgehend vermieden werden kann. Zu diesem Zwecke kann beispielsweise ein Kühlmittel durch die Rohrleitung geführt werden. Die Herstellungsgeschwindigkeit kann durch die so erzielbare schnelle Erstarrung wesentlich erhöht werden.

Vorzugsweise erfolgt die Abkühlung in Verbindung mit der Zuführung der äußeren Deckschicht mit einer Temperatur zwischen 5K und 30K, insbesondere zwischen 5K und 10K oberhalb der Erstarrungstemperatur des Beschichtungsmaterials, sodass die Erstarrung des Beschichtungsmaterials radial sowohl nach außen als auch von außen nach innen, jeweils zur Mitte der Beschichtung hin erfolgt. Auf diese Weise können unerwünschte Eigenspannungen der Beschichtung wirksam reduziert werden.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils in einer geschnittenen Seitenansicht in
- Fig. 1: einen Spritzkopf während der Beschichtung einer zylindrischen Rohrleitung;
- Fig. 2: den Spritzkopf während der Beschichtung einer weiteren, als Wellrohr ausgeführten Rohrleitung;
- Fig. 3: den Spritzkopf während der Beschichtung der Rohrleitung mit einer gewellten Deckschicht;
- Fig. 4: einen weiteren Spritzkopf während der Beschichtung einer als Wellrohr ausgeführten Rohrleitung mit besonders tiefen Wellentälern;
- Fig. 5: eine mit einer konzentrischen Beschichtung versehene hohlzylindrische Rohrleitung;
- Fig. 6: eine mit einer konzentrischen Beschichtung versehene, als Wellrohr ausgeführte Rohrleitung;
- Fig. 7: eine mit einer die Wellentäler einer als Wellrohr ausgeführten hohlzylindrischen Rohrleitung ausfüllenden Beschichtung;
- Fig. 8: eine mit einer wellenförmigen Beschichtung versehene, als Wellrohr ausgeführte Rohrleitung.

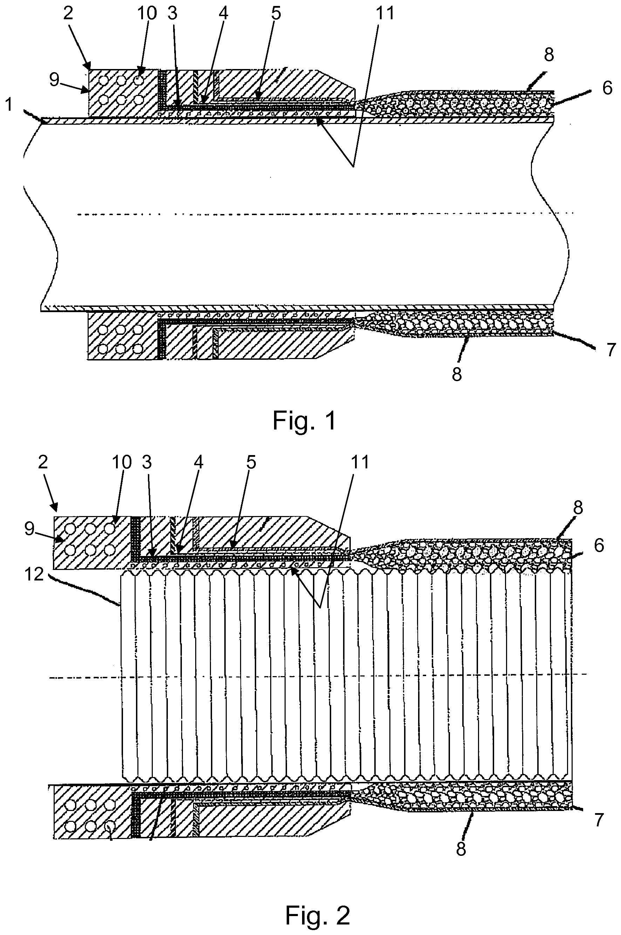

Das erfindungsgemäße Verfahren zur Beschichtung einer Rohrleitung 1 mittels eines Spritzkopfs 2 eines nicht weiter gezeigten Extruders wird nachstehend zunächst anhand der Figuren 1 bis 4 näher erläutert. Wie zu erkennen, wird durch einen jeweiligen Ringspalt 3, 4, 5 in dem Spritzkopf 2 auf die kontinuierlich zugeführte Rohrleitung 1 zugleich in einem konzentrischen Schichtaufbau ein innenliegendes thermoplastisches Beschichtungsmaterial 6 mit einem zellularen Aufbau, eine Haftvermittlerschicht 7 sowie eine äußere Deckschicht 8 aus einem kompakten Kunststoff aufgebracht. Hierzu ist in dem Spritzkopf 2 der Ringspalt 3 für die Zuführung des Beschichtungsmaterials 6 durch zumindest einen Bereich 9 mit Kühlmittelkanälen 10 auf eine gewünschte Temperatur einstellbar, die durch eine ringförmige Wärmetauscherfläche 11 von dem Ringspalt 4 getrennt sind. Auf diese Weise wird das fließfähige Beschichtungsmaterial 6 vor dem Aufbringen auf die Rohrleitung 1 zunächst entlang der Wärmeaustauscherfläche 11 geführt und auf eine Temperatur knapp oberhalb der Erstarrungstemperatur des Beschichtungsmaterials 6 abgekühlt. Dadurch expandiert das Beschichtungsmaterial 6 beim Austreten des Beschichtungsmaterials 6 aus dem Ringspalt 4 kontrolliert, sodass die äußere Deckschicht 8 in Abhängigkeit der eingestellten Temperatur des Beschichtungsmaterials 6 lediglich geringfügig geweitet wird, bis die Erstarrung des Beschichtungsmaterials 6 einsetzt. Dabei kann die Oberflächenbeschaffenheit der äußeren Deckschicht 8 der Form der Rohrleitung 1 entsprechen oder hiervon abweichen.

In Figur 1 ist eine konzentrische Anordnung einer außenseitig glatten äußeren Deckschicht 8 zu erkennen, die sich problemlos auch wie in Figur 2 erkennbar, bei einer als Wellrohr ausgeführten Rohrleitung 12 realisieren lässt.

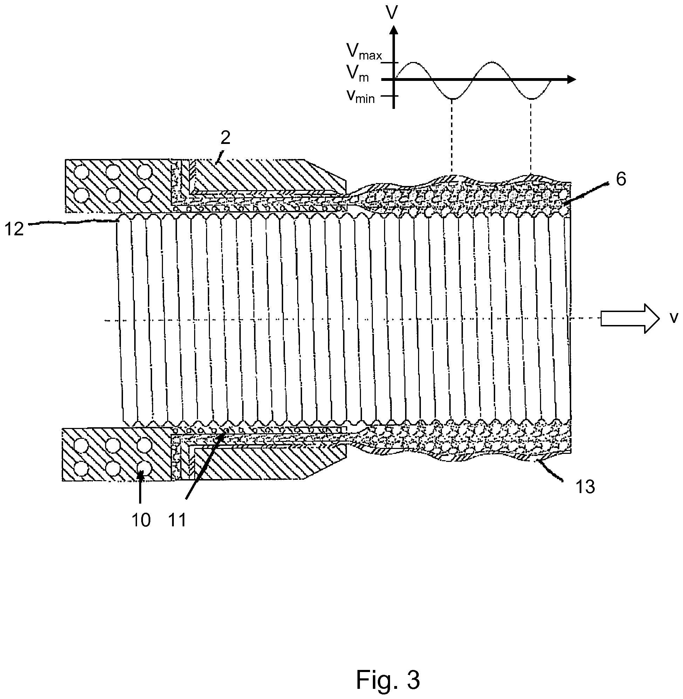

Zur Herstellung eines in Figur 3 gezeigten gewellten Verlaufs einer äußeren Deckschicht 13 wird lediglich die Geschwindigkeit v der durch den Spritzkopf 2 hindurch geführten Rohrleitung 12 periodisch verändert, wie dies in der ergänzenden Diagrammdarstellung in Figur 3 zu erkennen ist. Dadurch ergeben sich ausgehend von der mittleren Geschwindigkeit vₘ abwechselnd Phasen der Beschleunigung bis zu einer maximalen Geschwindigkeit vₘₐₓ und der Verzögerung bis zu einer minimalen Geschwindigkeit vₘᵢₙ. Bei einer vergleichsweise hohen Geschwindigkeit vₘₐₓ erfolgt demnach ein reduzierter Masseauftrag des Beschichtungsmaterials 6, gleichbedeutend mit einem reduzierten äußeren Umfang des Beschichtungsmaterials 6 zur Erzeugung eines Wellentals. Eine vergleichsweise niedrige Geschwindigkeit vₘᵢₙ führt demgegenüber zu einem erhöhten Masseauftrag des Beschichtungsmaterials 6, gleichbedeutend mit einem erweiterten äußeren Umfang des Beschichtungsmaterials 6 zur Erzeugung eines Wellenbergs. Auf diese Weise kann unabhängig von der Beschaffenheit der Rohrleitung 12 durch die schwellend gesteuerte Geschwindigkeit v der Verlauf und die Ausprägung des äußeren Beschichtungsmaterials 6 über die Länge der Rohrleitung 12 individuell und nahezu beliebig gesteuert werden.

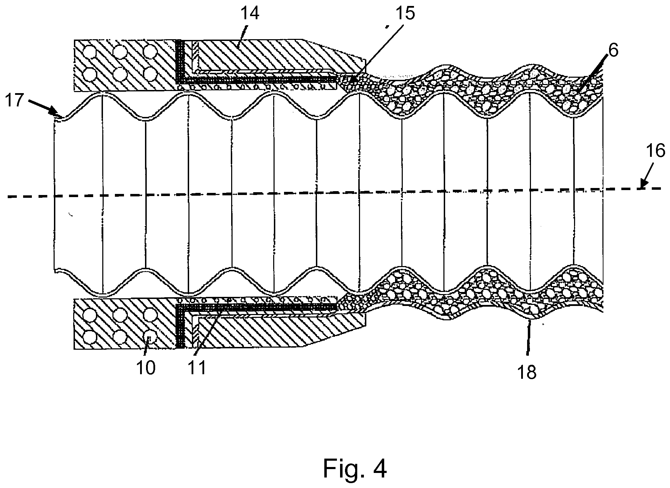

In Figur 4 ist eine abgewandelte Bauform eines Spritzkopfs 14 zu erkennen, bei welcher ein Düsenspalt 15 gegenüber der äußeren axialen Erstreckung des Spritzkopfs 14 zurückspringend ausgeführt wird. Auf diese Weise wird die austretende Strömung des Beschichtungsmaterials 6 in Richtung einer Mittelachse 16 einer gewellten Rohrleitung 17 abgelenkt. Hierdurch wird eine wesentlich verbesserte Füllung der im gezeigten Beispiel vergleichsweise tiefen Wellentäler erreicht. In Verbindung mit einer annähernd konstanten Geschwindigkeit der Rohrleitung 17 bilden sich die Wellentäler und Wellenberge der Rohrleitung 17 entsprechend lagerichtig in einer äußeren Deckschicht 18, mit demgegenüber geringfügig reduzierter Wellenhöhe ab.

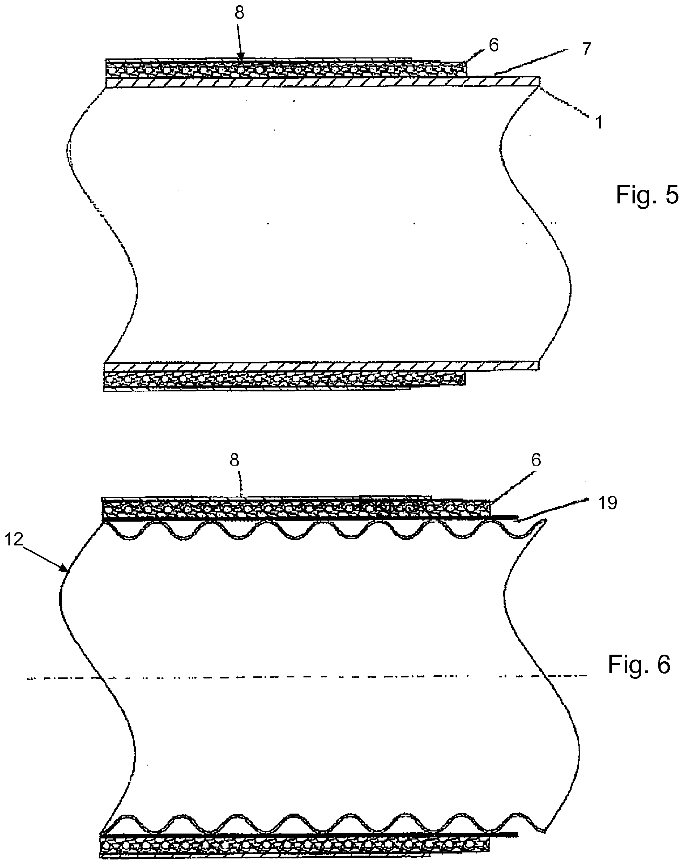

In den Figuren 5 bis 8 sind die in unterschiedlicher Weise mit einem vorstehend beschriebenen Beschichtungsmaterial 6 versehenen Rohrleitungen 1, 12 abschnittsweise dargestellt, wobei die in Figur 5 gezeigte Beschichtung dem hohlzylindrischen Verlauf in Figur 1 entspricht.

Hiervon abweichend zeigt Figur 6 eine Beschichtung auf der als Wellrohr ausgeführten Rohrleitung 12, bei welcher die Wellentäler durch eine hohlzylindrische innere Deckschicht 19 als Trennschicht von dem Beschichtungsmaterial 6 frei gehalten werden. Im Verlauf der Länge wird so eine Beschichtung konstanter Stärke mit entsprechend konstanten Dämmwerten erzeugt.

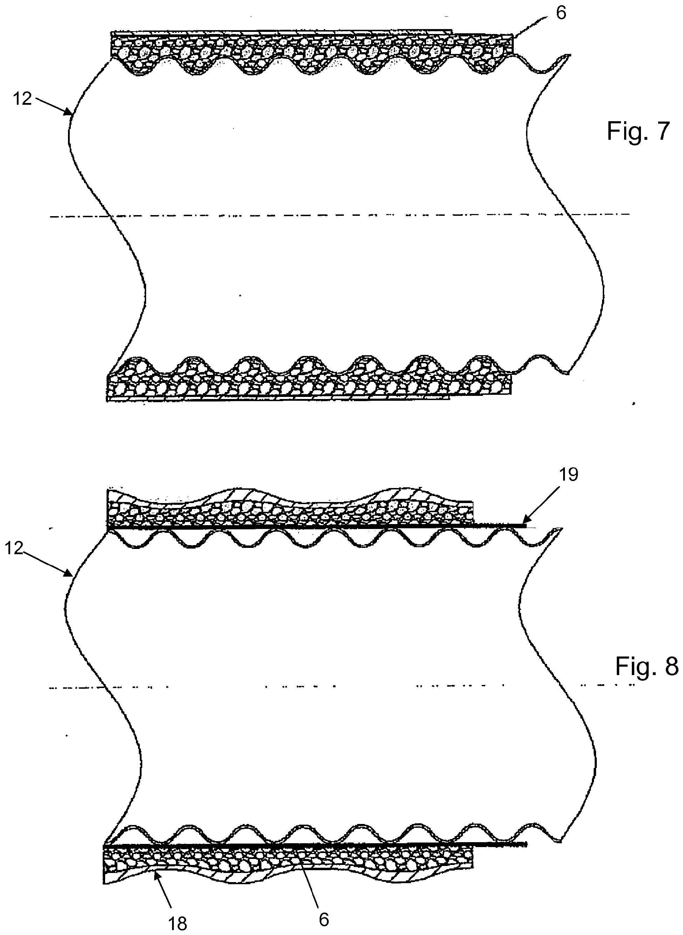

In Figur 7 ist eine die Wellentäler der als Wellrohr ausgeführten Rohrleitung 12 ausfüllenden Beschichtung entsprechend Figur 2 dargestellt, welches durch die Füllung eine optimale Verbindung und Anhaftung des Beschichtungsmaterials 6 an der Rohrleitung 12 gestattet.

Eine Variante mit einer umgekehrten Ausformung zeigt Figur 8, welche als eine wellenförmige Beschichtung auf die als Wellrohr ausgeführte Rohrleitung 12 aufgebracht ist. Im Unterschied zu Figur 6 folgt die äußere Deckschicht 18 einem wellenförmigen Verlauf, welcher durch periodische Beschleunigung und Verzögerung der Abzugsgeschwindigkeit, wie anhand Figur 3 beschrieben, erzeugt werden kann. Der wellenförmige Verlauf ist dabei erkennbar unabhängig von der als Wellrohr ausgeführten Rohrleitung 12. Vielmehr sind die Wellentäler der Rohrleitung 12 aufgrund der hohlzylindrischen inneren Deckschicht 19 als Trennschicht frei von dem Beschichtungsmaterial 6.

Hiervon abweichend zeigt Figur 6 eine Beschichtung auf der als Wellrohr ausgeführten Rohrleitung 12, bei welcher die Wellentäler durch eine hohlzylindrische innere Deckschicht 19 als Trennschicht von dem Beschichtungsmaterial 6 frei gehalten werden. Im Verlauf der Länge wird so eine Beschichtung konstanter Stärke mit entsprechend konstanten Dämmwerten erzeugt.

In Figur 7 ist eine die Wellentäler der als Wellrohr ausgeführten Rohrleitung 12 ausfüllenden Beschichtung entsprechend Figur 2 dargestellt, welches durch die Füllung eine optimale Verbindung und Anhaftung des Beschichtungsmaterials 6 an der Rohrleitung 12 gestattet.

Eine Variante mit einer umgekehrten Ausformung zeigt Figur 8, welche als eine wellenförmige Beschichtung auf die als Wellrohr ausgeführte Rohrleitung 12 aufgebracht ist. Im Unterschied zu Figur 6 folgt die äußere Deckschicht 18 einem wellenförmigen Verlauf, welcher durch periodische Beschleunigung und Verzögerung der Abzugsgeschwindigkeit, wie anhand Figur 3 beschrieben, erzeugt werden kann. Der wellenförmige Verlauf ist dabei erkennbar unabhängig von der als Wellrohr ausgeführten Rohrleitung 12. Vielmehr sind die Wellentäler der Rohrleitung 12 aufgrund der hohlzylindrischen inneren Deckschicht 19 als Trennschicht frei von dem Beschichtungsmaterial 6.

## Patentansprüche

1. Verfahren zur Beschichtung einer Rohrleitung (1, 12, 17), bei dem ein Beschichtungsmaterial (6) aus einem extrudierten thermoplastischen Kunststoff mit einem zellularen Aufbau auf die Rohrleitung (1, 12, 17) aufgebracht und außenseitig von einer äußeren Deckschicht (8, 18) aus einem kompakten Kunststoff eingeschlossen wird, wobei das fließfähige Beschichtungsmaterial (6) vor dem Aufbringen auf die Rohrleitung (1, 12, 17) über eine Wärmeaustauscherfläche (11) eines Spritzkopfs (2, 14) geführt und auf eine Temperatur abgekühlt wird, die nicht mehr als 30K oberhalb seiner Erstarrungstemperatur liegt, **dadurch gekennzeichnet, dass** die äußere Deckschicht (8, 18) mit einer ringförmig gewellten Struktur hergestellt wird, indem die Abzugsgeschwindigkeit (v) der Rohrleitung (1, 12, 17) schwellend zwischen einer maximalen Geschwindigkeit (vₘₐₓ) und einer minimalen Geschwindigkeit (vₘᵢₙ) gesteuert wird.

2. Verfahren nach Anspruch 1, **dadurch gekennzeichnet, dass** das Beschichtungsmaterial (6) auf eine Temperatur zwischen 5 K und 30 K oberhalb der Erstarrungstemperatur des Beschichtungsmaterials abgekühlt wird.

3. Verfahren nach den Ansprüchen 1 oder 2, **dadurch gekennzeichnet, dass** zwischen dem Beschichtungsmaterial (6) und der Rohrleitung (1, 12, 17) eine innere Deckschicht (19) auf die Rohrleitung (1, 12, 17) aufgebracht wird.

4. Verfahren nach Anspruch 3, **dadurch gekennzeichnet, dass** die innere Deckschicht (19) überlappend auf die Rohrleitung (1, 12, 17) gewickelt wird.

5. Verfahren nach zumindest einem der vorhergehenden Ansprüche, **dadurch gekennzeichnet, dass** zwischen dem Beschichtungsmaterial (6) und der Rohrleitung (1, 12, 17) eine innere Haftvermittlerschicht (7) auf die Rohrleitung (1, 12, 17) aufgebracht wird.

6. Verfahren nach zumindest einem der vorhergehenden Ansprüche, **dadurch gekennzeichnet, dass** zwischen dem Beschichtungsmaterial (6) und einer äußeren Deckschicht eine äußere Haftvermittlerschicht aufgebracht wird.

7. Verfahren nach zumindest einem der vorhergehenden Ansprüche, **dadurch gekennzeichnet, dass** die innere Haftvermittlerschicht (7) und/oder die äußere Haftvermittlerschicht durch Spülauftrag oder Sprühauftrag aufgebracht wird.

8. Verfahren nach zumindest einem der vorhergehenden Ansprüche, **dadurch gekennzeichnet, dass** das Beschichtungsmaterial (6) durch einen Ringspalt (3, 4, 5) eines Spritzkopfs (2, 14) zugeführt wird und nach dem Austritt aus dem Ringspalt (3, 4, 5) derart expandiert, dass die Haftvermittlerschicht (7) und/oder die äußere Deckschicht (8, 18) geweitet wird.

9. Verfahren nach zumindest einem der vorhergehenden Ansprüche, **dadurch gekennzeichnet, dass** das Beschichtungsmaterial (6), zumindest eine innere oder äußere Haftvermittlerschicht (7) und die äußere Deckschicht (8, 18) im Koextrusionsverfahren aufgebracht werden.

10. Verfahren nach zumindest einem der vorhergehenden Ansprüche, **dadurch gekennzeichnet, dass** das Beschichtungsmaterial (6), zumindest eine innere oder äußere Haftvermittlerschicht (7) und die äußere Deckschicht (8, 18) in einem Querspritzkopf zusammengeführt und ringförmig um die Rohrleitung (1, 12, 17) auf diese aufgebracht werden.

11. Verfahren nach zumindest einem der vorhergehenden Ansprüche, **dadurch gekennzeichnet, dass** das Beschichtungsmaterial (6) als einen wesentlichen Materialanteil Polyamid, Polybutylenterephthalat, Polypropylen, Polyketon und/oder Polyethylen enthält.

12. Verfahren nach zumindest einem der vorhergehenden Ansprüche, **dadurch gekennzeichnet, dass** die Rohrleitung (1, 12, 17) und/oder die innere Deckschicht (19) gemeinsam mit der äußeren Deckschicht (8, 18) das Beschichtungsmaterial (6) dimensionsstabil einschließen.

13. Verfahren nach zumindest einem der vorhergehenden Ansprüche, **dadurch gekennzeichnet, dass** die Rohrleitung (1, 12, 17) und/oder die innere Deckschicht (19) auf eine Temperatur unterhalb der Erstarrungstemperatur des Beschichtungsmaterials (6) gebracht werden.

14. Verfahren nach zumindest einem der vorhergehenden Ansprüche, **dadurch gekennzeichnet, dass** die äußere Deckschicht (8, 18) mit einer Temperatur zwischen 5 K und 30 K unterhalb der Erstarrungstemperatur des Beschichtungsmaterials (6) aufgebracht wird.

## Claims

1. Process for the coating of a pipe (1, 12, 17) where a coating material (6) made of an extruded thermoplastic with a cellular structure is applied to the pipe (1, 12, 17) and is enclosed on the external side by an exterior overlayer (8, 18) made of a compact plastic, where, before application to the pipe (1, 12, 17), the flowable coating material (6) is passed across a heat exchanger area (11) of a die (2, 14) and is cooled to a temperature that is not more than 30K above its solidification temperature, **characterized in that** the exterior overlayer (8, 18) is produced with an annular-corrugated structure, **in that**
the take-off velocity (V) of the pipe (1, 12, 17) is controlled in pulsating manner between a maximal velocity (Vₘₐₓ) and a minimal velocity (Vₘᵢₙ).

2. Process according to Claim 1, **characterized in that** the coating material (6) is cooled to a temperature that is above the solidification temperature of the coating material by from 5K to 30K.

3. Process according to Claim 1 or 2, **characterized in that**, between the coating material (6) and the pipe (1, 12, 17), an interior overlayer (19) is applied to the pipe (1, 12, 17).

4. Process according to Claim 3, **characterized in that** the interior overlayer (19) is wound in overlapping manner onto the pipe (1, 12, 17).

5. Process according to at least one of the preceding claims, **characterized in that**, between the coating material (6) and the pipe (1, 12, 17), an interior adhesion-promoter layer (7) is applied to the pipe (1, 12, 17).

6. Process according to at least one of the preceding claims, **characterized in that**, between the coating material (6) and an exterior overlayer, an exterior adhesion-promoter layer is applied.

7. Process according to at least one of the preceding claims, **characterized in that** the interior adhesion-promoter layer (7) and/or the exterior adhesion-promoter layer is/are applied by flow-coating or spray-coating.

8. Process according to at least one of the preceding claims, **characterized in that** the coating material (6) is introduced via an annular gap (3, 4, 5) of a die (2, 14) and, after discharge from the annular gap (3, 4, 5) expands in a manner such that the adhesion-promoter layer (7) and/or the exterior overlayer (8, 18) is extended.

9. Process according to at least one of the preceding claims, **characterized in that** the coextrusion process is used to apply the coating material (6), at least one interior or exterior adhesion-promoter layer (7) and the exterior overlayer (8, 18).

10. Process according to at least one of the preceding claims, **characterized in that** the coating material (6), at least one interior or exterior adhesion-promoter layer (7) and the exterior overlayer (8, 18) are brought together in a crosshead die and are applied to the pipe (1, 12, 17) in annular form around the same.

11. Process according to at least one of the preceding claims, **characterized in that** the coating material (6) comprises, as a substantial proportion of the material, polyamide, polybutylene terephthalate, polypropylene, polyketone and/or polyethylene.

12. Process according to at least one of the preceding claims, **characterized in that** the coating material (6) is enclosed by the pipe (1, 12, 17) and/or the interior overlayer (19), together with the exterior overlayer (8, 18) in a manner that provides dimensional stability.

13. Process according to at least one of the preceding claims, **characterized in that** the pipe (1, 12, 17) and/or the interior overlayer (19) is/are brought to a temperature below the solidification temperature of the coating material (6).

14. Process according to at least one of the preceding claims, **characterized in that** the temperature of the exterior overlayer (8, 18) when it is applied is below the solidification temperature of the coating material (6) by from 5K to 30K.

## Revendications

1. Procédé de revêtement d'une conduite tubulaire (1, 12, 17), selon lequel un matériau de revêtement (6) en un plastique thermoplastique extrudé ayant une structure cellulaire est appliqué sur la conduite tubulaire (1, 12, 17) et entouré sur le côté extérieur par une couche de recouvrement extérieure (8, 18) en un plastique compact, le matériau de revêtement fluide (6) étant acheminé avant l'application sur la conduite tubulaire (1, 12, 17) sur une surface d'échange de chaleur (11) d'une tête de pulvérisation (2, 14) et refroidi à une température qui n'est pas supérieure à 30 K au-dessus de sa température de solidification, **caractérisé en ce que** la couche de recouvrement extérieure (8, 18) est fabriquée avec une structure ondulée annulaire par ajustement de la vitesse de retrait (v) de la conduite tubulaire (1, 12, 17) sous forme sinusoïdale entre une vitesse maximale (vₘₐₓ) et une vitesse minimale (vₘᵢₙ).

2. Procédé selon la revendication 1, **caractérisé en ce que** le matériau de revêtement (6) est refroidi à une température comprise entre 5 K et 30 K au-dessus de la température de solidification du matériau de revêtement.

3. Procédé selon les revendications 1 ou 2, **caractérisé en ce qu'**une couche de recouvrement intérieure (19) est appliquée sur la conduite tubulaire (1, 12, 17) entre le matériau de revêtement (6) et la conduite tubulaire (1, 12, 17).

4. Procédé selon la revendication 3, **caractérisé en ce que** la couche de recouvrement intérieure (19) est enroulée en chevauchement sur la conduite tubulaire (1, 12, 17).

5. Procédé selon au moins l'une quelconque des revendications précédentes, **caractérisé en ce qu'**une couche intérieure de promoteur d'adhésion (7) est appliquée sur la conduite tubulaire (1, 12, 17) entre le matériau de revêtement (6) et la conduite tubulaire (1, 12, 17).

6. Procédé selon au moins l'une quelconque des revendications précédentes, **caractérisé en ce qu'**une couche extérieure de promoteur d'adhésion est appliquée entre le matériau de revêtement (6) et une couche de recouvrement extérieure.

7. Procédé selon au moins l'une quelconque des revendications précédentes, **caractérisé en ce que** la couche intérieure de promoteur d'adhésion (7) et/ou la couche extérieure de promoteur d'adhésion sont appliquées par application par rinçage ou application par pulvérisation.

8. Procédé selon au moins l'une quelconque des revendications précédentes, **caractérisé en ce que** le matériau de revêtement (6) est introduit au travers d'une fente annulaire (3, 4, 5) d'une tête de pulvérisation (2, 14) et expansé après la sortie de la fente annulaire (3, 4, 5) de telle sorte que la couche de promoteur d'adhésion (7) et/ou la couche de recouvrement extérieure (8, 18) soient élargies.

9. Procédé selon au moins l'une quelconque des revendications précédentes, **caractérisé en ce que** le matériau de revêtement (6), au moins une couche de promoteur d'adhésion intérieure ou extérieure (7) et la couche de recouvrement extérieure (8, 18) sont appliquées par le procédé de co-extrusion.

10. Procédé selon au moins l'une quelconque des revendications précédentes, **caractérisé en ce que** le matériau de revêtement (6), au moins une couche de promoteur d'adhésion intérieure ou extérieure (7) et la couche de recouvrement extérieure (8, 18) sont rassemblées dans une tête de pulvérisation transversale et appliqués en anneau autour de la conduite annulaire (1, 12, 17) sur celle-ci.

11. Procédé selon au moins l'une quelconque des revendications précédentes, **caractérisé en ce que** le matériau de revêtement (6) contient du polyamide, du polybutylène téréphtalate, du polypropylène, de la polycétone et/ou du polyéthylène en tant qu'une proportion de matériau importante.

12. Procédé selon au moins l'une quelconque des revendications précédentes, **caractérisé en ce que** la conduite tubulaire (1, 12, 17) et/ou la couche de recouvrement intérieure (19) entourent conjointement avec la couche de recouvrement extérieure (8, 18) le matériau de revêtement (6) en lui conférant une stabilité dimensionnelle.

13. Procédé selon au moins l'une quelconque des revendications précédentes, **caractérisé en ce que** la conduite tubulaire (1, 12, 17) et/ou la couche de recouvrement intérieure (19) sont portées à une température inférieure à la température de solidification du matériau de revêtement (6).

14. Procédé selon au moins l'une quelconque des revendications précédentes, **caractérisé en ce que** la couche de recouvrement extérieure (8, 18) est appliquée à une température comprise entre 5 K et 30 K en dessous de la température de solidification du matériau de revêtement (6).
